# EUROPEAN PATENT APPLICATION

(11) **EP 2 712 203 A1**
(43) Date of publication of application: **26.03.2014**
(21) Application number: 12185786.6
(22) Date of filing: 25.09.2012
(51) Int. Cl.: H04N 21/234, H04N 21/235, H04N 21/81, H04N 21/8358, H04N 21/8547, H04N 21/845

(54) **Method and system for enhancing redistributed audio / video content**

(71) Applicant: Nagravision S.A., 1033 Cheseaux-sur-Lausanne (CH)
(72) Inventor: Sarda, Pierre, 1040 Echallens (CH); Main, Alexander, Ottawa, Ontario KOA 1TO (CA); Bodo, Yann, 75014 Paris (FR)
(74) Representative: Leman Consulting S.A.

(57) **Abstract**

A method and a system for recognizing, by a broadcasting platform, content sequences of an input linear content stream by retrieving content information determined by small fingerprints of portions of the linear content and comparing the small fingerprint with reference fingerprints stored in a database. The output stream transmitted to the user units is modified by the addition of a synchronization stream including at least identifiers of the content sequences and associated temporal information determined on the basis of the reference fingerprints. The content information is exploited by the broadcasting platform or the users units for replacing a sequence by anther one, removing predefined sequences, skipping or forcing viewing content sequences. The initial linear content stream is thus enriched with accurate content information allowing the viewer to navigate and select the content to play either in live or replay mode. A back in time feature may also be introduced allowing navigating back and forward inside a content currently played.

## Description

### Field of the invention

The invention relates to enhanced features of audio / video content distribution systems. In particular the content is pre-processed by adding supplementary data to improve navigation, in the content, choices and selection of a portion or the entire content at reception by a multimedia user device.

### Technical background

Some systems of the prior art proposes solutions for modifying a given audio/video stream by inserting, suppressing or replacing predefined sequences.

Document US7694318B2 discloses a system for detecting segments in video programming and replacing the detected segments with a replacement portion. The method includes (a) receiving an input video signal; (b) automatically identifying a segment in the input video signal locally using fingerprint data of both the segment and the input video signal; and (c) generating an output video signal comprising the input video signal with the segment replaced with a replacement portion. The method further comprises (a) analyzing video segments and computing fingerprint data; (b) storing the fingerprint data in a database; and (c) transmitting the fingerprint data to subscribers on a computer communications network. The method may also include (a) creating a fingerprint of a portion of an incoming video stream; (b) retrieving at least one stored fingerprint, wherein the stored fingerprint represents a known video segment; (c) comparing the fingerprint with the at least one stored fingerprint to determine the presence of a known video segment in the incoming video stream; and (d) replacing the known video segment in the incoming stream with a replacement video segment.

Document EP2270742A1 describes a method of tracking advertisement provided over a network, comprising obtaining a fingerprint of an advertisement to be distributed over the network; obtaining a fingerprint of advertising content received by a user, and comparing the fingerprints to determine viewing of a particular advertisement by a particular user. The fingerprint of the content viewed by the user may be determined at an access or other network, or alternatively data sufficient to compute the fingerprint is obtained in the network, which data is passed to a means such as a profile server, or other fingerprint determiner, for fingerprint computing. Fingerprint data relating to a plurality of advertisements may be stored in a database. A stream of content may be provided with markers indicating where advertisements occur within the stream so that fingerprinting occurs only when indicated by the markers. The fingerprints are preferably created during content creation, although they may be created at other times. The fingerprint can be computed for audio content of the channel, video content or combinations of these, or any supporting data. The advertisement is then inserted into the broadcast TV stream into the place holders identified by add markers.

These methods and systems apply to services providers, broadcaster or head end platforms where the content stream is modified by adding advertisements at places identified by fingerprints previously generated at a phase of content analysis. The fingerprints are stored in a database to make easier video sequences recognition in the content stream.

Document W02011032167 discloses a media device for receiving and presenting to a user media content where a fingerprint derived from the media content is used to query a server to identify the media content. Based on the media content identified based on the fingerprint, additional content is obtained and presented to the user. The additional content may include an advertisement (e.g., for a product, service, or other media content), which is selected based on the identified media content. In an embodiment, a fingerprint is derived dynamically from the media content subsequent to receiving a command to present the media content or additional content associated with the media content being presented.

In an embodiment, additional content may be presented based on the position in the playing of the media content. In another embodiment, the additional content based on the position in the playing of the media content may be presented in response to a user command. Playing of the media content may also be synchronized over multiple devices based on the position in the playing of the media content. Synchronization over multiple devices may be performed by starting the playing of media content on multiple devices at the same time, seeking to an arbitrary position of the media content on a device or delaying the playing of media content on a device. During synchronized playing of the media content on multiple devices, a command to fast-forward, rewind, pause, stop, seek, or play on one device may be performed on all synchronized devices. In an embodiment, a determination may be made that advertisements are being played based on the position in the playing of the media content. The advertisement may be skipped over or fast-forwarded through based on the position in the playing of the media content.

The content is modified by the media device (computer, DVR, set top box, TV, hand held device, etc....) but not by the broadcaster or head end. The media device gets the additional content or related data from different units to which it is connected such as a media source, fingerprint server, network device, web servers, and other media devices.

### Summary of the invention

An aim is to provide a method and a system to add and control predefined audio/video sequence as for example advertisement sequences into a linear TV content stream in an efficient and accurate way.

The aim is achieved by a method to enhance transmission of audio/video linear content intended to be redistributed by a broadcasting platform in a stream to a plurality of user units comprising steps of:
- receiving by the broadcasting platform a linear audio/video content stream,
- generating small fingerprints on successive portions of the received linear audio/video content,
- comparing the generated small fingerprints with reference fingerprints stored in a database, said reference fingerprints being produced and stored during a preliminary phase independently of the linear audio/video content,
- retrieving content information when a reference fingerprint matches with a generated fingerprint, said content information comprising at least a content identifier and temporal position of the compared small fingerprints recognized in the content
- calculating a temporal synchronization information between the recognized content, the actual temporal position of the recognized small fingerprint, and the linear content,
- generating a synchronization stream comprising the retrieved content information and the calculated temporal synchronization information,
- sending a modified stream including the synchronization stream and the linear audio/video content stream to the user units, said user units being configured to exploit the content information of the synchronization stream in relation to the content received from the linear audio/video content stream.

A linear content stream is a stream of audio/video content without detailed information, in particular accurate start and stop time, duration, content identifier. Some information may be present in form of EPG (Electronic Program Guide) data.

The broadcasting platform may be a managing center, a network head end or an intermediate head end configured to redistribute content to sub networks.

The retrieved content information further comprises in addition to the content identifier, and temporal position of the compared small fingerprints recognized in the content, a duration of the identified content, additional description of the content to complete an electronic program guide.

The method consists mainly of recognizing, by a broadcasting platform, content sequences of an input linear content stream by retrieving content information determined by small fingerprints of portions of the linear content and comparing the small fingerprint with reference fingerprints stored in a database. The output stream transmitted to the user units is modified by the addition of a synchronization stream including at least identifiers of the content sequences and associated temporal information determined on the basis of the reference fingerprints. The content information is exploited by the broadcasting platform or the users units for replacing a sequence by another one, removing predefined sequences, skipping or forcing viewing content sequences.

The initial linear content stream is thus enriched with accurate content information allowing the viewer to navigate and select the content to play either in live or replay mode. A back in time feature may also be introduced allowing navigating back and forward inside a content currently played.

The fingerprints generation and comparisons are advantageously done by the broadcasting platform instead of the user units to save processing time; minimize errors and number of connection requests to the fingerprint database.

A further object of the invention is a system comprising a broadcasting platform configured to enhance transmission and redistribute audio/video linear content in a stream to a plurality of user units **characterized in that** the broadcasting platform comprises:
- a receiver for receiving a linear audio/video content stream,
- a generator for generating small fingerprints on successive portions of the received linear audio/video content,
- a comparator for comparing the generated small fingerprints with reference fingerprints stored in a database, said reference fingerprints being produced and stored during a preliminary phase independently of the linear audio/video content,
- a synchronization manager configured to retrieve content information when a reference fingerprint matches with a generated fingerprint, said content information comprising at least a content identifier and temporal position of the compared small fingerprints recognized in the content
- the synchronization manager being further configured to calculate a temporal synchronization information between the recognized content, the actual temporal position of the recognized small fingerprint, and the linear content, and to generate a synchronization stream comprising the retrieved content information and the calculated temporal synchronization,
- a transmitter for sending a modified stream including the synchronization stream and the linear audio/video content stream to the user units, said user units being configured to exploit the content information of the synchronization stream in relation to the content received from the linear audio/video content stream.

### Brief description of the figures

The invention will be better understood with the following detailed description, which refers to the attached figures given as non-limitative examples.
Figure 1 shows the system of the invention in a mode of live addressable advertising where the modified stream transmitted to the user units contains temporal synchronization data used for replacing some received advertisement sequences by specific ones intended to predefined user units.
Figure 2 shows the system of the invention in a replay mode where advertisements inside a movie are removed. The temporal synchronization data in the modified stream indicate advertisement time periods to skip.
Figure 3 shows schematically a portion of input stream where contents are identified by small fingerprints at different temporal positions within the content to determine start and stop time of content to be replaced.

### Detailed description of the invention

The system of the invention comprises a broadcasting platform BRP configured to reorganize and complete an input linear audio/video digital content data stream ST IN and redistribute a modified output stream ST MOD to a plurality of user units REC connected to the broadcasting platform BRP.

As the input linear content stream ST IN is considered as "unknown", the broadcasting platform BRP analyzes this stream ST IN in order to recognize specific content elements such as movies, advertisements, news, entertainment events etc.

The recognition process is based on the generation by the broadcasting platform BRP of small fingerprints FP to be submitted to a fingerprint database FPDB. This database stores reference fingerprints FP REF generated on known content sequences during pre-processing steps carried out independently of the current input content stream ST IN processing. The reference fingerprints FP REF are associated to content information comprising at least a content identifier ID, timing information including the position of the fingerprint in relation to the start of the content, start and stop time of the content and additional metadata such as specific information on the nature of the content or instructions for the output stream processing.

The small fingerprints FP are generated, at different time positions within the input linear content stream ST IN, on short video sequences of a few seconds (e.g. typically less or equal than 10 seconds) or a duration as short as possible to minimize processing time of the input stream ST IN but still sufficient for carrying out efficient comparison with the reference fingerprints FP REF of the database FPDB.

These fingerprints FP are then compared with the reference fingerprints FP REF stored in the database FPDB. When a reference fingerprint FP REF matches with a generated fingerprint FP, the concerned content element can be identified by a synchronization manager SYNC MAN which extracts content information comprising at least a content identifier and temporal position of the fingerprints recognized in the content. This content information is then used by the synchronization manager SYNC MAN to calculate temporal information between the content recognized by the fingerprint comparisons, the actual temporal position of the recognized fingerprint and the input linear content stream ST IN.

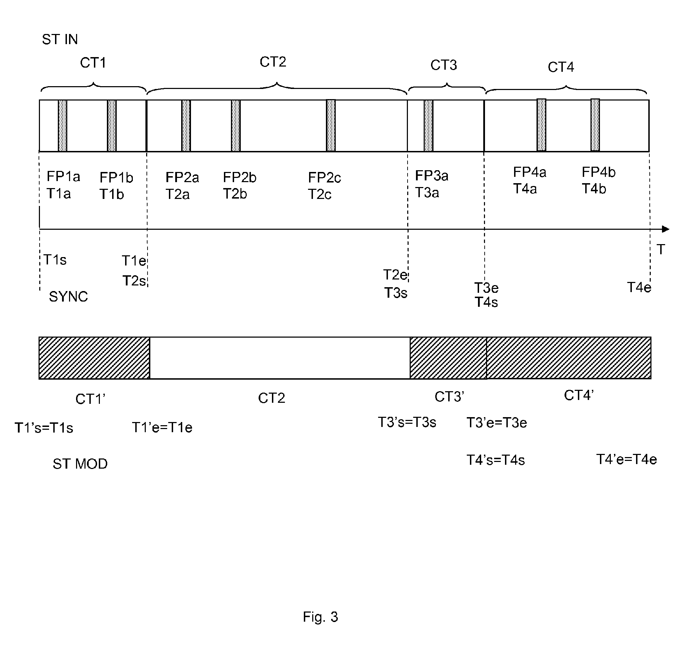

Figure 3 shows schematically a portion of input stream ST IN comprising successively contents CT1, CT2, CT3, CT4. Each content has been recognized and identified thanks to small fingerprints FP generated from the input stream ST IN and compared with reference fingerprints FP REF of the database.

Content CT1 is identified by fingerprint FP1a and FP1b respectively located at temporal position T1a and T1b. Content CT2 is identified by fingerprint FP2a, FP2b and FP2c respectively located at temporal position T2a, T2b and T1c. Content CT3 is identified by fingerprint FP3a at position T3a. Finally content CT4 is identified by fingerprint FP4a and FP4b respectively located at temporal position T4a and T4b.

The fingerprint database FPDB provides the temporal information of a given fingerprint FP when a match with a corresponding reference fingerprint FP REF is found. According to the example, the receiver and fingerprint generator sends fingerprints of successive contents of the stream to the database FPDB to obtain matching fingerprints FP1a and FP1b of a content sequence identified as CT1. The temporal locations T1a and T1b of the fingerprints FP1a and FP1b are taken from the database. The synchronization manager SYNC MAN determines the start time T1s and the end (stop) time T1e in the corresponding content sequence CT1 by using ST IN temporal information, the matching fingerprints temporal information from the database FPDB, and the temporal localization in ST IN of the shorts sequences used to generate fingerprints FP1a and FP1b . Similar operations are performed with all following content sequences of the input stream ST IN to calculate in an accurate way their respective start and stop time (T2s, T2e), (T3s, T3e), (T4s T4e).

The synchronization stream SYNC comprises thus content information determined by the synchronization manager SYNC MAN on the basis of the content information retrieved from the fingerprint database FPDB.

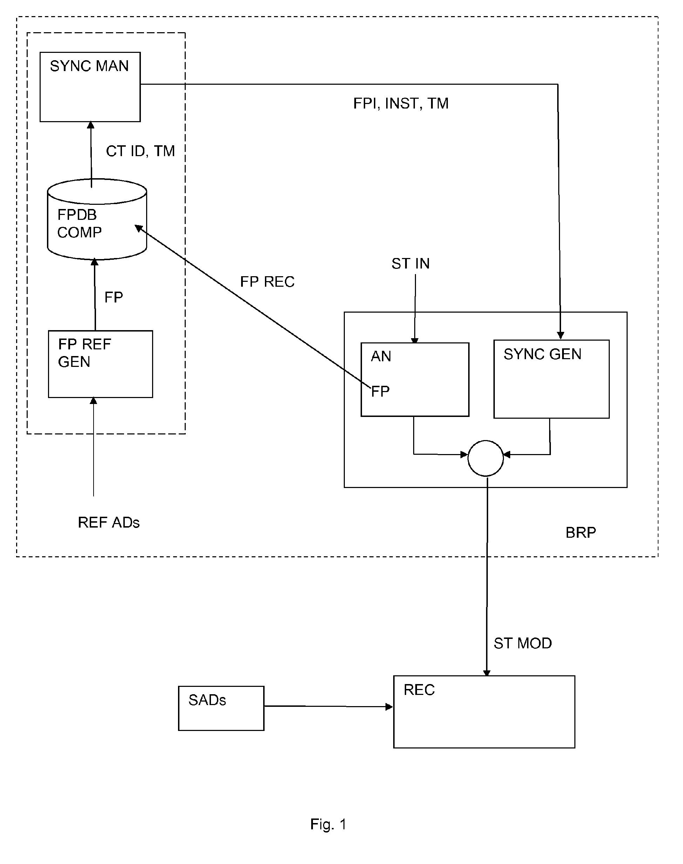

According to a first embodiment represented by figure 1, the modified output stream ST MOD made up of the input stream ST IN completed with the content information is processed by the user unit REC. According to a preferred example the method of the invention applies to detect advertisements in the input linear stream in order to replace the original advertisements by targeted advertisements, i.e. advertisements adapted to user profile, user environment or geographical location of the user unit, etc. The new advertisement sequences are prepared to have a same duration than the original sequences that they replace. The temporal data included in the modified stream are compared with the one of the new advertisement stored in a particular server SADs made accessible to the user unit REC.

In the example of figure 3, content CT1, CT3 and CT4 are replaced respectively by new content CT1', CT3' and CT4' having each a start and stop time (T1's, T1'e), (T3's, T3'e) (T4's, T4'e) corresponding to the start and stop time of the original sequences previously calculated. Also, the format of the replacement sequence is identical to the format of the original sequence ST IN.

The new advertisement sequences are preferably addressed to the user units in push mode, i.e. the server SADs initiate the transmission of the advertisement to specific user units or to a group of user units having a subscription for accessing a broadcast content and therefore having a network address known by the advertisement server SADs. In general, the advertisement server SADs is independent from the content broadcast platform BRP itself while having an access to the user units addresses.

According to an embodiment, the new content sequences, for example advertisement sequences, are retrieved by the user unit in pull mode, i.e. the user unit requests receiving the new content sequences by connecting sporadically or periodically to the server SADs.

According to a further embodiment, the user unit may receive in advance new content sequences from the server SADs in push or pull mode. These sequences being stored in a memory of the user unit are adapted in duration and format and ready to be used to replace, according to predefined replacement rules, specific sequences recognized by the broadcasting platform BRP.

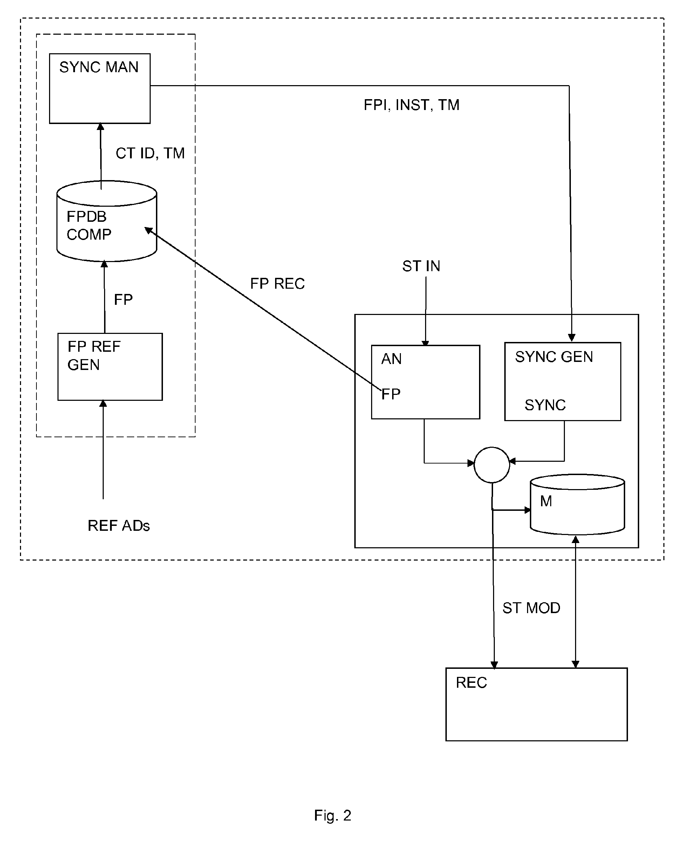

In a catch-up mode, also called replay mode, illustrated by figure 2, the advertisements sequences may be removed from the input stream thanks to the synchronization data indicating which portion of the input stream consists of an advertisement and its start and stop time. After removal of all or part of the advertisement sequences, the remaining content of the stream is stored in a mass memory M of the broadcasting platform BRP to be accessible by user units REC at any time for replay. The stream ST MOD sent to the user units REC contains content and synchronization data used for establishing an enhanced electronic program guide with accurate temporal data useful for navigating in the content when played i.e. pause, fast forward, fast backward, slow, fast motion, return at start, jump to predefined part, skip advertisements, etc.

It has to be noted that in catch-up mode, advertisements may also be replaced by targeted ones instead of being removed.

When content is stored by the server, the synchronization data allows returning to the start or at any place back in time when the content is accessed during its broadcasting.

According to an embodiment, the modified content stream ST MOD additionally comprises instructions and parameters embedded by the broadcasting platform BRP allowing the user units REC enabling, disabling or skipping the advertisements sequences or forcing viewing of the same even if the user tries to skip them. Some advertisements may also be removed by the user while recording a specified content.

Other instructions and parameters may also allow or forbid the user unit recording predefined content in a local memory such as a hard disk, an optical disk or a solid state drive.

## Claims

1. A method to enhance transmission of audio/video linear content intended to be redistributed by a broadcasting platform in a stream to a plurality of user units comprising steps of:
- receiving by the broadcasting platform a linear audio/video content stream,
- generating small fingerprints on successive portions of the received linear audio/video content,
- comparing the generated small fingerprints with reference fingerprints stored in a database, said reference fingerprints being produced and stored during a preliminary phase independently of the linear audio/video content,
- retrieving content information when a reference fingerprint matches with a generated fingerprint, said content information comprising at least a content identifier and temporal position of the compared small fingerprints recognized in the content
- calculating a temporal synchronization information between the recognized content, the actual temporal position of the recognized small fingerprint, and the linear content,
- generating a synchronization stream comprising the retrieved content information and the calculated temporal synchronization information,
- sending a modified stream including the synchronization stream and the linear audio/video content stream to the user units, said user units being configured to exploit the content information of the synchronization stream in relation to the content received from the linear audio/video content stream.

2. The method according to claim 1 **characterized in that** the modified stream comprises new content sequences replacing original content sequences identified and determined by the temporal synchronization information including start and stop time of the sequence, the new content sequences having a same duration and format than the corresponding original content sequences.

3. The method according to claim 1 or 2 **characterized in that** the new content sequences are addressed to specific user units or to a specific group of user units by a server independent from the content broadcast platform, said server having an access to network addresses of the user units.

4. The method according to claim 1 or 2 **characterized in that** the new content sequences are retrieved by the user unit which connects sporadically or periodically to a server independent from the broadcast platform.

5. The method according to anyone of claim 1 to 4 **characterized in that** it comprises a further step of storing all or part of the modified stream in a mass memory and a step of removing from the linear audio/video content stream sequences defined by the content identifier and temporal synchronization information including start and stop time of said sequence.

6. The method according to anyone of claim 1 to 5 **characterized in that** the modified content stream additionally comprises instructions and parameters embedded by the broadcasting platform, said instructions and parameters allowing the user units enabling, disabling or skipping advertisements sequences or forcing viewing of the advertisements sequences.

7. The method according to claim 6 **characterized in that** the instructions and parameters are configured to allow or forbid the user unit recording predefined content in a local memory.

8. A system comprising a broadcasting platform configured to enhance transmission and redistribute audio/video linear content in a stream to a plurality of user units **characterized in that** the broadcasting platform comprises:
- a receiver for receiving a linear audio/video content stream,
- a generator for generating small fingerprints on successive portions of the received linear audio/video content,
- a comparator for comparing the generated small fingerprints with reference fingerprints stored in a database, said reference fingerprints being produced and stored during a preliminary phase independently of the linear audio/video content,
- a synchronization manager configured to retrieve content information when a reference fingerprint matches with a generated fingerprint, said content information comprising at least a content identifier and temporal position of the compared small fingerprints recognized in the content
- the synchronization manager being further configured to calculate a temporal synchronization information between the recognized content, the actual temporal position of the recognized small fingerprint, and the linear content, and to generate a synchronization stream comprising the retrieved content information and the calculated temporal synchronization,
- a transmitter for sending a modified stream including the synchronization stream and the linear audio/video content stream to the user units, said user units being configured to exploit the content information of the synchronization stream in relation to the content received from the linear audio/video content stream.

9. The system according to claim 8 **characterized in that** the modified stream comprises new content sequences replacing original content sequences identified and determined by the temporal synchronization information including start and stop time of the sequence, the new content sequences having a same duration and format than the corresponding original content sequences.

10. The system according to claim 8 or 9 **characterized in that** it further comprises a server independent from the content broadcast platform configured to address the new content sequences to specific user units or to a specific group of user units, said server having an access to network addresses of the user units.

11. The system according to claim 8 or 9 **characterized in that** the user unit is configured to retrieve the new content sequences by connecting sporadically or periodically to a server independent of the broadcast platform.

12. The system according to anyone of claim 8 to 11 **characterized in that** the broadcasting platform further comprises a mass memory for storing all or part of the modified stream, the synchronization manager being further configured to remove from the linear audio/video content stream sequences defined by the content identifier and temporal synchronization information including start and stop time of said sequence.

13. The system according to anyone of claim 8 to 12 **characterized in that** the broadcasting platform embeds into the modified content stream additionally instructions and parameters, said instructions and parameters allowing the user units enabling, disabling or skipping advertisements sequences or forcing viewing of the advertisements sequences.

14. The system according to claim 13 **characterized in that** the instructions and parameters are configured to allow or forbid the user unit recording predefined content in a local memory.

15. The system according to claim 10 or 11 **characterized in that** the user unit is further configured to receive from the server and store in advance new content sequences adapted in duration and format and ready to be used to replace, according to predefined replacement rules, specific sequences recognized by the broadcasting platform,.
